# EUROPÄISCHE PATENTSCHRIFT

(11) **EP 3 251 913 B1**
(45) Veröffentlichungstag und Bekanntmachung des Hinweises auf die Patenterteilung: **29.09.2021**
(21) Anmeldenummer: 17173525.1
(22) Anmeldetag: 30.05.2017
(51) Int. Cl.: B61D 17/12, B61D 17/04, B61D 27/00

(54) **SCHIENENFAHRZEUG MIT DACHMODUL**
RAIL VEHICLE WITH ROOF MODULE
VÉHICULE SUR RAIL COMPRENANT UN MODULE DE TOIT

(30) Priorität: 02.06.2016 DE 102016110241
(43) Veröffentlichungstag der Anmeldung: 06.12.2017
(73) Patentinhaber: Bombardier Transportation GmbH, 10785 Berlin (DE)
(72) Erfinder: Weyrowski, Sebastian, 13359 Berlin (DE); Seidler, Hendrik, 16562 Hohen Neuendorf (DE)
(74) Vertreter: Zimmermann & Partner Patentanwälte mbB

(56) Entgegenhaltungen:
- WO-A1-2009/074531
- DE-A1- 19 746 795
- DE-A1- 19 844 812
- JP-A- 2008 056 211
- US-A- 5 333 554

## Beschreibung

### Technisches Gebiet

Die Erfindung betrifft ein Schienenfahrzeug mit einem Dachmodul, insbesondere betrifft die Erfindung ein Schienenfahrzeug mit einem Dachmodul in Sandwichbauweise.

### Vorbekannter Stand der Technik

Schienenfahrzeuge sind mit mehreren Baugruppen ausgestattet, um alle gewünschten Funktionalitäten bereitstellen zu können. Dabei handelt es sich oftmals um Großbaugruppen, wie zum Beispiel Segmente des Wagenkastens, Dach- oder Wandsegmente, Lüftungsanlagen und Verkabelungsanlagen. Dabei nehmen die Großbaugruppen vergleichsweise viel Raum ein, was insbesondere im Falle einer Anordnung im Fahrzeuginnenraum zu Platzproblemen führen kann. Auch die erhöhten Aufwendungen für die Montage solcher Großbaugruppen beeinflussen die Wirtschaftlichkeit des Schienenfahrzeugs.

Außerdem führen die vielfältigen Baugruppen zu einer Gewichtssteigerung des Gesamtfahrzeugs. Die Gewichtssteigerung wiederum führt zu einem höheren Energiebedarf während des Betriebes. Dies erhöht die Betriebskosten. Zudem werden durch die vielfältigen Baugruppen zusätzliche Wartungsmaßnahmen erforderlich, die ebenfalls die Kosten erhöhen.

Um die Gewichtssteigerung zu begrenzen, können zum Beispiel Faserverbundwerkstoffe für die Fertigung und Montage der Baugruppen verwendet werden. Die Faserverbundwerkstoffe bringen allerdings wirtschaftliche Nachteile mit sich, zum Beispiel durch das Herstellungsverfahren. Daher ist es bekannt, Aluminium für die Montage und Bereitstellung von Baugruppen zu verwenden und dabei Gewicht zu reduzieren.

Die Patentschrift US 4'966'082 zeigt zum Beispiel eine Bodenkonstruktion, die in Sandwichbauweise mit Deckplatten und gefalteten Kern ausgeführt ist. Insbesondere wird dafür eine Aluminiumlegierung verwendet.

Das Dokument DE 197 46 795 A1 offenbart eine Innenverkleidung für den Deckenbereich eines großräumigen Fahrzeuges zur Personenbeförderung.

### Problemstellung

Es ist daher Aufgabe der vorliegenden Erfindung, ein Schienenfahrzeug mit einer Dachkonstruktion bereitzustellen, die eine Gewichtseinsparung bei gleichbleibender Festigkeit bietet und gleichzeitig eine Reduzierung von Einzelteilen für unterschiedliche Baugruppen ermöglicht.

### Erfindungsgemäße Lösung

Diese Aufgabe wird gelöst durch ein Schienenfahrzeug nach Anspruch 1 und ein Verfahren zum Aufbau eines Dachmoduls für ein Schienenfahrzeug nach Anspruch 15. Weitere Ausführungsformen, Modifikationen und Verbesserungen ergeben sich anhand der folgenden Beschreibung und der beigefügten Ansprüche.

Gemäß einer Ausführungsform wird ein Schienenfahrzeug mit wenigstens einem Dachmodul bereitgestellt, wobei das Schienenfahrzeug eine Außenseite, einen Innenraum, eine Längsrichtung und eine zur Längsrichtung im Wesentlichen senkrecht verlaufenden Querrichtung aufweist. Das Dachmodul weist ein Obergurtelement, das einen Teil der Außenseite des Schienenfahrzeugs bildet, und ein Untergurtelement auf, das einen Teil des Innenraums des Schienenfahrzeugs bildet oder das zum Innenraum des Schienenfahrzeugs zeigt, wobei zwischen dem Obergurtelement und dem Untergurtelement ein Zwischenraum vorhanden ist. Das Dachmodul weist außerdem ein Kernelement auf, das zwischen dem Obergurtelement und dem Untergurtelement verlaufende Wände aufweist, wobei die Wände den Zwischenraum zwischen dem Obergurtelement und dem Untergurtelement in Querrichtung in mehrere Hohlkammern unterteilen, die sich entlang der Längsrichtung erstrecken. Die Querschnittsgröße von zwei oder mehr Hohlkammern ist, in einer Ebene senkrecht zur Längsrichtung gesehen, unterschiedlich und die Querschnittsgröße ist angepasst, unterschiedliche Versorgungseinrichtungen und/oder Funktionselemente des Schienenfahrzeugs aufzunehmen.

Das Dachmodul gemäß Ausführungsformen der Erfindung erlaubt die in dem Dachmodul vorhandenen Hohlkammern zur Integration weiterer Funktionen zu nutzen. Zum Beispiel können in das Dachmodul Elemente der Wärmedämmung, Luftführung, und Aufnahme(n) für weitere Gewerke integriert werden. Aufgrund der Funktionsintegration in das Dachmodul kann eine signifikante Gewichtseinsparung erreicht werden, insbesondere da separate Befestigungsvorrichtungen für die einzelnen Gewerke wegfallen. Die Gewerke (z.B. Versorgungseinrichtungen und/ oder Funktionselemente) finden ihre Aufnahme in der Dachkonstruktion und werden in und von der Dachkonstruktion gehalten. Dies zieht nicht nur eine Gewichtsersparnis nach sich, sondern auch eine Reduzierung der Einzelteile zur Montage der Versorgungseinrichtungen und/ oder Funktionselemente. Eine Reduzierung der Einzelteile wiederum erlaubt es, sowohl die Kosten für die Herstellung als auch die Kosten für die Montage zu reduzieren.

Zudem kann die Größe der Hohlkammern entsprechend den Belastungen, die durch die Versorgungseinrichtungen und/oder Funktionselemente auftreten, angepasst werden. Dadurch kann eine große Flexibilität gewährleistet werden, was einerseits die Auswahl der in die Hohlkammern zu integrierenden Versorgungseinrichtungen und/oder Funktionselemente und andererseits die Gestaltung der Hohlkammern und des gesamten Dachmodulaufbaus betrifft. Die Hohlkammern bieten eine sichere Aufnahme für die Versorgungseinrichtungen und/oder Funktionselemente, wodurch eine zuverlässige Halterung ohne großen Wartungsaufwand bereitgestellt werden kann.

Die Ausführungsformen der Erfindung können auch die Nachteile bisheriger Lösungen, wie zum Beispiel die Nachteile der Gewichtssteigerung der Fahrzeuge, des erhöhten Aufwands bei der Montage von Großbaugruppen im Fahrzeuginnenraum, wirtschaftlicher Nachteile von Faserverbundbauweisen, Nachteile der Metalldifferentialbauweise, der Aluminiumintegralbauweise, von Stahlgitterstrukturen und verkleidender GFK (glasfaserverstärkter Kunststoff)-Platten und geschraubter Aluminiumsegmente verringern oder sogar ganz vermeiden.

Obergurtelemente und Untergurtelemente sind aus der Statik bekannt. Sie bezeichnen durchgehende, tragende Elemente einer tragenden Struktur. In der Regel werden Ober- und Untergurtelement durch ein Kernelement, beispielsweise durch Querverstrebungen oder einen Steg, stabilisiert. Das Kernelement ist zwischen den Gurten angeordnet und hält das Obergurtelement und das Untergurtelement auch unter Belastung auf Abstand. Je nach Art der einwirkenden Belastung können Obergurtelement und Untergurtelement zug- und/oder druckstabile Elemente sein. Das Obergurtelement, das Untergurtelement und das Kernelement sind die tragenden Elemente des Dachmoduls. Obergurtelement und Untergurtelement erstrecken sich über die gesamte Länge der Querrichtung des Dachmodules, wobei Unterbrechungen im Obergurtelement oder im Untergurtelement, beispielsweise durch Wartungsöffnungen, die Stabilität der tragenden Struktur aus Obergurtelement, Untergurtelement und Kernelement im Wesentlichen nicht beeinträchtigen.

Gemäß einer Ausführungsform verlaufen der Obergurt und der Untergurt abschnittsweise zueinander parallel und abschnittsweise geneigt zueinander, sodass zumindest einige der Hohlkammern unterschiedliche Höhen aufweisen. Dadurch können die Hohlkammern verschiedenartige und verschieden große Versorgungseinrichtungen und/oder Funktionselemente aufnehmen und tragen, bzw. stützen. Zusätzlich kann durch die angemessene Größe einer Hohlkammer für die darin befindliche Versorgungseinrichtung und/oder das Funktionselement eine zuverlässige Lagerung mit reduziertem Spiel zwischen der Versorgungseinrichtung und/oder dem Funktionselemente und den Obergurt-, Untergurt-, oder Kernelement erreicht werden. Außerdem wird durch eine derartige Gestaltung eine hohe Stabilität bei möglichst großer Aufnahmekapazität erreicht.

In einer Ausführungsform ist die Größe der Hohlkammern durch die über die Erstreckung des Dachmoduls in Querrichtung variierende Höhe des Dachmoduls an die unterschiedlichen Versorgungseinrichtungen und/oder Funktionselement angepasst, wobei sich die Höhe im Wesentlichen senkrecht zur Längsrichtung und senkrecht zur Querrichtung des Schienenfahrzeugs erstreckt. Dies ermöglicht es, eine über die Fahrzeugquerrichtung gekrümmt verlaufende Geometrie des Dachmoduls, bzw. des Obergurtelements bereitzustellen, was die Fahrzeugeigenschaften, wie zum Beispiel die Steifigkeit des Wagenkastens verbessern kann. Außerdem kann durch die geeignete Anpassung der Höhe des Dachmoduls über die Fahrzeugquerrichtung eine Geometrie ohne schroffe Übergänge bereitgestellt werden, was sich positiv auf die Herstellungskosten und die Stabilität auswirkt.

Gemäß einer Ausführungsform weist das Kernelement erste Abschnitte, an denen das Kernelement im Wesentlichen parallel zum Obergurtelement verläuft, und zweite Abschnitte auf, an denen das Kernelement im Wesentlichen parallel zum Untergurtelement verläuft, wodurch Lagendopplungen in der Struktur des Dachmoduls entstehen. Die Lagendopplungen können eine Versteifung an den jeweiligen Positionen bereitstellen und dadurch die Stabilität erhöhen. Zum Beispiel können Lagendopplungen eingesetzt werden, um die Aufnahmefähigkeit des Dachmoduls für Versorgungseinrichtungen und/oder Funktionselemente und die Stützwirkung zu erhöhen. Weiterhin können die Lagendopplungen verwendet werden, um Aufnahme- oder Halteelemente daran zu befestigen und dabei eine ausreichende Verankerung der Versorgungseinrichtungen und/oder Funktionselemente zu gewährleisten.

In einer Ausführungsform sind die Länge der ersten Abschnitte und der zweiten Abschnitte des Kernelements derart gewählt, dass die Belastungen durch die Versorgungseinrichtungen und/oder Funktionselemente in den Hohlräumen, die von den ersten oder zweiten Abschnitten begrenzt sind, getragen werden. Dies erhöht die Stabilität und die Sicherheit des Dachmoduls.

In einer weiteren Ausführungsform umfassen die Versorgungseinrichtungen und/oder Funktionselemente eine Wärmedämmung, eine Luftführung, ein elektrisches Gewerk oder elektrische Gewerke, und/oder elektrische Leitungen, wobei mindestens eine der Hohlkammern einen Lüftungskanal beherbergt. Dadurch können Versorgungseinrichtungen und/oder Funktionselemente in das Dachmodul integriert werden, die einen hohen räumlichen Bedarf aufweisen und dadurch gegebenenfalls den für Fahrgäste oder Ladung in dem Schienenfahrzeug zur Verfügung stehenden Raum begrenzen würden.

Gemäß einer Ausführungsform umfasst das Schienenfahrzeug weiterhin eine oder mehrere Aufnahmen für Anbauten an der dem Innenraum des Schienenfahrzeugs zugewandten Seite des Dachmoduls und/oder Aufnahmen für Anbauten an der Außenseite des Schienenfahrzeugs, wobei die Aufnahmen insbesondere C-Schienen umfassen. Die Aufnahmen können die Montage und die Wartung der Versorgungseinrichtungen und/oder Funktionselemente erleichtern. Außerdem können die Aufnahmen einen standardisierten oder modulartigen Aufbau des Dachmoduls des Schienenfahrzeugs ermöglichen.

In einer Ausführungsform können die Aufnahmen an Positionen angebracht sein, an denen eine Lagendopplung aus Obergurtelement und Kernelement oder Untergurtelement und Kernelement auftritt. Dies erhöht die Sicherheit der Befestigung der Aufnahmen.

Typischerweise können die Aufnahmen insbesondere für leichtere Ausrüstungsgegenstände mithilfe von C-Schienen ausgeführt werden. C-Schienen bieten dabei eine große Flexibilität. Aufnahmen für schwerere Ausrüstungsgegenstände können insbesondere mithilfe von Stützplatten ausgeführt werden.

In einer weiteren Ausführungsform umfasst das Schienenfahrzeug weiterhin eine oder mehrere Wartungsöffnungen an dem Untergurtelement, um von dem Innenraum des Schienenfahrzeugs aus Wartungsarbeiten an den in den Hohlkammern enthaltenen Versorgungseinrichtungen und/oder Funktionselementen vorzunehmen. Mithilfe der Wartungsöffnungen können die Versorgungseinrichtungen und/oder Funktionselemente leicht zugänglich gemacht werden. Dies spart Kosten bei Sicherheitsinspektionen und Wartungsarbeiten. In einer Ausführungsform können die Wartungsöffnungen symmetrisch bezüglich der Fahrzeuglängsachse und/oder der Fahrzeugquerachse angeordnet sein. Dies kann dazu beitragen, Herstellungskosten zu sparen.

Gemäß einer Ausführungsform ist das Dachmodul zumindest teilweise in Faserverbundbauweise hergestellt. Bei Ausführung in Faserverbundbauweise wirken sich die Formfreiheit sowie die geringe spezifische Dichte von Faserverbundwerkstoffen und Faserverbundkunststoffen (FVK) begünstigend aus. Um die Toleranzen aus der Fertigung der einzelnen Faserverbundschichten (Obergurtelement, Untergurtelement, Kernelement) hinsichtlich Form- und Lageabweichungen aufnehmen zu können, können diese Schichten mit geeigneten Klebstoffen verbunden sein. Die Reihenfolge der Verklebungen wird dabei so gewählt, dass die Montage der Hilfsteile für die Versorgungseinrichtungen und/oder Funktionselemente möglich ist.

In einer Ausführungsform kann das Dachmodul, insbesondere das Dachmodul in Faserverbundbauweise längs- oder quergeteilt ausgebildet sein. Dabei können Kosten die Herstellungskosten und der Herstellungsaufwand reduziert werden, zum Beispiel durch die Einsparung von Kosten für die Negativformen. Wird das Dachmodul geteilt ausgeführt, können außerdem entsprechende Verbindungen zwischen den Segmenten ausgeführt werden, die die auftretenden Druck-, Zug, Torsions- oder Scherkräfte aufnehmen können. Zudem können weiterhin entsprechende Dichtungen vorgesehen sein, die die Dichtheit der Segmente und Hohlkammern untereinander sicherstellt. Die Dichtung kann zum Beispiel als ein umlaufendes Band oder eine Gummistumpfdichtung ausgeführt werden.

Gemäß einer Ausführungsform sind das Obergurtelement und das Untergurtelement dehnsteif, und die Wände des Kernelements sind schub- und drucksteif ausgebildet. Dies kann dazu dienen, die auftretenden Belastungen und Kräfte, wie Druck-, Zug, Torsions- oder Scherkräfte adäquat aufnehmen zu können. Dadurch werden die Sicherheit und die Zuverlässigkeit der Dachmodulkonstruktion erhöht.

In einer weiteren Ausführungsform ist das Dachmodul an dem Wagenkasten des Schienenfahrzeugs montierbar, wobei das Dachmodul insbesondere über zwei Ebenen mit dem Wagenkasten verbindbar ist. Durch die Montierbarkeit wird eine passende Verbindung geschaffen, bzw. eine modulartige Aufbauweise des Schienenfahrzeugs ermöglicht. Die Verbindung über zwei Ebenen verhindert große, punktuelle und einseitige Belastungen und ermöglicht eine Verteilung der Kräfte über zwei Ebenen. Dies erhöht die Sicherheit und die Lebensdauer des Schienenfahrzeugs mit Dachmodul.

In einer Ausführungsform weist das Dachmodul in Querrichtung gesehen eine zentrale Hohlkammer auf, an die im Vergleich zur zentralen Hohlkammer kleinere Hohlkammern angrenzen, wobei die zentrale Hohlkammer einen größeren Querschnitt (insbesondere in Fahrzeugquerrichtung) im Vergleich zu jeder der angrenzenden Hohlkammern aufweist, und wobei die zentrale Hohlkammer beispielsweise einen Lüftungsschacht für eine Klimaeinrichtung des Schienenfahrzeugs bildet. Dabei ist es möglich, mehrere Versorgungseinrichtungen und/oder Funktionselemente in einem Dachmodul unterzubringen. Gleichzeitig kann der umfangreiche Raum, der für die Belüftung und die Klimaeinrichtung benötigt wird, aus dem Fahrzeuginneren in das Dachmodul verlagert werden.

Gemäß einer Ausführungsform weist das Schienenfahrzeug einen Wagenkasten auf, wobei mehrere Dachmodule in Fahrzeuglängsrichtung an dem Wagenkasten befestigt sind. Das Dachmodul in mehrere Segmente aufzuteilen verringert den Herstellungsaufwand und damit die Herstellungskosten für das Dachmodul.

In einer Ausführungsform kann das Dachmodul an den Wagenkasten des Schienenfahrzeugs durch Kaltfügen befestigt sein. Insbesondere kann das Dachmodul mit Kaltfügeelementen mit dem Wagenkasten verbunden sein. Die Befestigung kann in manchen Ausführungsformen über eine oder mehrere Ebenen am Wagenkasten, insbesondere dem Seitenwandobergurt des Wagenkastens verbunden werden. Das Kaltfügen des Dachmoduls mit dem Wagenkasten erlaubt eine Vorausrüstung des Wagens sowie des Dachmoduls vor dem Fügen.

Nach einer Ausführungsform wird ein Verfahren zum Aufbau eines Dachmoduls in Sandwichbauweise für ein Schienenfahrzeug bereitgestellt. Das Verfahren umfasst das Bereitstellen eines Obergurtelements und eines Untergurtelements für das Dachmodul; das Anbringen von Wänden eines Kernelements zwischen dem Obergurtelement und dem Untergurtelement, um eine Struktur mit Hohlkammern zwischen dem Obergurtelement und dem Untergurtelement zu bilden. Die Wände des Kernelements werden dabei derart angeordnet, dass das Kernelement in zumindest einem ersten Abschnitt zum Obergurtelement und in zumindest einem zweiten Abschnitt zum Untergurtelement im Wesentlichen parallel verläuft, um eine Lagendopplung bereitzustellen. Das Verfahren umfasst weiterhin das Gestalten der Länge des zumindest einen ersten Abschnitts und des zumindest einen zweiten Abschnitts gemäß einer Belastung durch eine Versorgungseinrichtung und/oder ein Funktionselement des Schienenfahrzeugs, die oder das in zumindest einer der Hohlkammern vorgesehen ist, wobei die Hohlkammer von dem zumindest einen ersten Abschnitt oder von dem zumindest einen zweiten Abschnitt begrenzt wird.

Das beschriebene Dachmodul nach Ausführungsformen der Erfindung kann in allen Schienenfahrzeugen, aber auch in anderen Fahrzeugen verwendet werden. Das beschriebene Schienenfahrzeug kann jedwede Art von Schienenfahrzeug sein.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figur 1 zeigt eine schematische Schnittansicht eines ersten Dachmoduls nach einer Ausführungsform der Erfindung.
Figur 2 zeigt eine schematische Schnittansicht eines Dachmoduls nach einer weiteren Ausführungsform der Erfindung.
Figur 3 zeigt eine schematische Schnittansicht eines Dachmoduls nach einer weiteren Ausführungsform der Erfindung.
Figur 4 zeigt eine schematische, perspektivische Ansicht eines Dachmoduls von unten nach einer weiteren Ausführungsform der Erfindung.
Figur 5 zeigt eine schematische, perspektivische Ansicht eines Dachmoduls von oben nach einer weiteren Ausführungsform der Erfindung.

### Ausführungsbeispiele

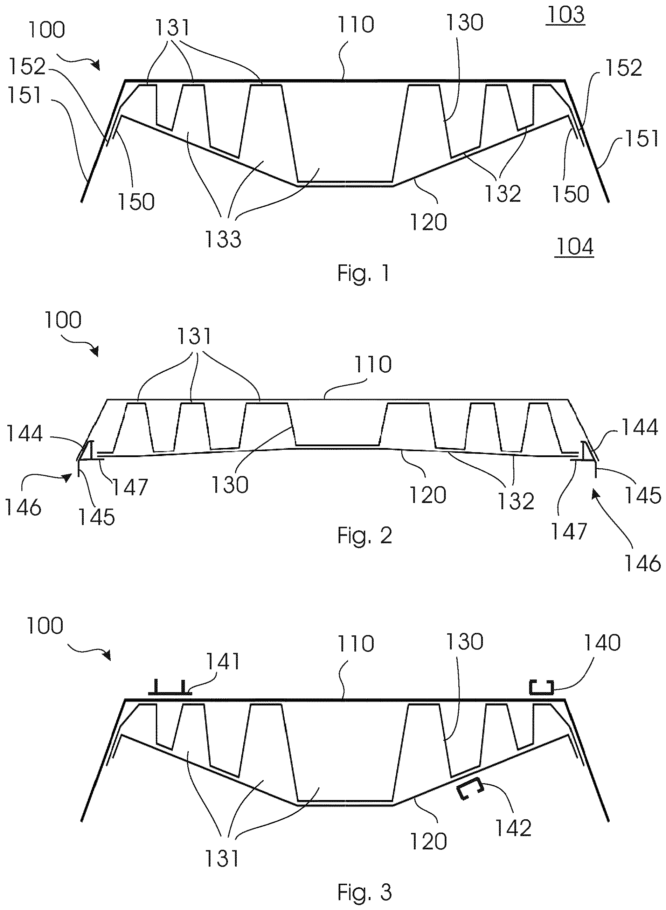

Figur 1 zeigt ein Dachmodul 100 nach Ausführungsformen der Erfindung. Das Dachmodul 100 hat eine Außenseite, die das Schienenfahrzeug von einem Außenraum 103 außerhalb eines Schienenfahrzeugs trennt. Außerdem hat das Dachmodul eine Innenseite, die den Innenraum 104 des Schienenfahrzeugs abgrenzt. Das Dachmodul 100 ist zusammengesetzt aus einem Obergurtelement 110, einem Untergurtelement 120, und einem Kernelement 130.

Typischerweise umfasst das Obergurtelement 110 die Außenseite des Schienenfahrzeugs und weist in Richtung des Außenraums 103 des Schienenfahrzeugs. Das Obergurtelement 110 ist im Wesentlichen gerade zur Fahrzeugquerachse ausgebildet und weist abgebogene Ränder auf, die in Richtung der Wände oder Streben eines Wagenkastens des Schienenfahrzeugs zeigen können. Die Ränder des Obergurtelements können dazu verwendet werden, das Dachmodul an einem Wagenkasten eines Schienenfahrzeugs zu befestigen.

Das Dachmodul weist außerdem ein Untergurtelement 120 auf. Typischerweise umfasst das Untergurtelement 120 die Innenseite des Dachmoduls und weist in Richtung des Innenraums 104 des Schienenfahrzeugs. In einigen Ausführungsformen kann das Untergurtelement 120 die Decke des Innenraums des Schienenfahrzeugs bilden, einen Teil der Decke des Innenraums bilden oder die Decke des Innenraums umfassen. Das Untergurtelement 120 in dem in Figur 1 gezeigten Beispiel verläuft nur in einem mittigen Abschnitt (in Fahrzeugquerrichtung gesehen) parallel zum Obergurtelement 110. In anderen Abschnitten, die zu den Seiten des Schienenfahrzeugs weisen, verläuft das Untergurtelement 120 in einem Winkel zum Obergurtelement 110. In dem in Figur 1 gezeigten Beispiel verlaufen links und rechts vom mittigen, parallelen Abschnitt, zwei Abschnitte derart, dass sie im Bereich der Seitenwände des Schienenfahrzeugs mit den Randbereichen des Obergurtelements 110 zusammengeführt werden.

Typischerweise weist auch das Untergurtelement 120 zwei Randbereiche 150 auf, die im Vergleich zu dem restlichen Untergurtelement 120 oder in Richtung des Schienenfahrzeugwagenkastens abgewinkelt sind, um im Wesentlichen parallel zu den entsprechenden Randbereichen 151 (die in Richtung des Schienenfahrzeugwagenkastens abgewinkelt sind) des Obergurtelements 110 zu verlaufen. Dabei ist es möglich, die Randbereiche 150 des Untergurtelements 120 und die Randbereiche 151 des Obergurtelements 110 zu verbinden. In einem Beispiel kann ein vorgefertigtes Dachmodul bereitgestellt werden, das leicht an einem Wagenkasten oder den Seitenwänden eines Wagenkastens montiert werden kann.

Das Dachmodul 100 gemäß Ausführungsformen weist zudem ein Kernelement 130 auf, das sich zwischen dem Obergurtelement 110 und dem Untergurtelement 120 erstreckt. Das Kernelement 130 weist typischerweise Wände auf, die zwischen dem Obergurtelement 110 und dem Untergurtelement 120 verlaufen. Insbesondere erstreckt sich das Kernelement 130 mäanderförmig zwischen dem Obergurtelement 110 und dem Untergurtelement 120. Die Wände des Kernelemente verlaufen dabei abschnittsweise parallel zum Obergurtelement, abschnittsweise parallel zum Untergurtelement und zwischen diesen (oder diese verbindend), typischerweise im Wesentlichen von oben nach unten und umgekehrt. Dabei bildet das Kernelement 130 mehrere Hohlkammern 133, die sich zwischen dem Obergurtelement 110 und dem Untergurtelement 120 befinden. In Figur 11 sind beispielhaft elf Hohlkammern in dem Dachmodul 100 gezeigt. Durch die Gestaltung des Untergurtelements 120 mit Abschnitten, die parallel zum Obergurtelement 110 verlaufen und Abschnitten, die in einem Winkel zum Obergurtelement 110 verlaufen, weisen die Hohlkammern 133 unterschiedliche Größen auf. Die Hohlkammern 133 verlaufen dabei typischerweise in Längsrichtung des Schienenfahrzeugs. Die Fahrzeuglängsachse verläuft in der in Figur 1 gezeigten Ansicht in die Zeichenebenen hinein.

Gemäß einigen hierin beschriebenen Ausführungsformen weist das Kernelement 130 erste Abschnitte 131, die im Wesentlichen parallel zum Obergurtelement verlaufen, und zweite Abschnitte 132 auf, die im Wesentlichen parallel zum Untergurtelement 120 verlaufen. Dabei sind die ersten Abschnitte 131 des Kernelements 130, die im Wesentlichen parallel zum Obergurtelement 110 verlaufen, in unmittelbarer Nähe zum Obergurtelement 110 angeordnet, und die zweiten Abschnitte 132 des Kernelements 130, die im Wesentlichen parallel zum Untergurtelement 120 verlaufen, in unmittelbarer Nähe zum Untergurtelement angeordnet. Durch die ersten und zweiten Abschnitte 131 und 132 entstehen Lagendopplungen in der Struktur des Dachmoduls, die dem Dachmodul insbesondere eine hohe Stabilität verleihen. In der gezeigten Ausführungsform besteht das ganze Kernelement aus ersten Abschnitten und zweiten Abschnitten und einem Randbereich 152, der im Vergleich zum restlichen Verlauf des Kernelements oder in Richtung des Schienenfahrzeugwagenkastens abgewinkelt ist. Typischerweise überlappt der Randbereich 152 des Kernelements 130 mit den Randbereichen 150, 151 des Obergurtelements 110 und des Untergurtelements 120, wobei der Randbereich 152 insbesondere mit dem Obergurtelement und dem Untergurtelement (und auch mit dem Wagenkasten des Schienenfahrzeugs) verbunden werden kann.

Die durch das Kernelement 130 gebildeten Hohlkammern 133 weisen eine unterschiedliche Größe auf. In den gezeigten Figuren weist das Dachmodul 100 eine zentrale Hohlkammer auf, die den größten Querschnitt in Fahrzeugquerrichtung aufweist. Die anderen Hohlkammern haben immer paarweise im Wesentlichen dieselbe Größe (in den Bildern rechts und links von der zentralen Hohlkammer). In die unterschiedlich großen Hohlkammern 133 können unterschiedliche Versorgungseinrichtungen und/oder Funktionselemente des Schienenfahrzeugs aufgenommen werden. Zum Beispiel kann in die zentrale Hohlkammer (die den Abschnitt des Untergurtelements 120 enthält, der parallel zum Obergurtelement 110 verläuft) eine Versorgungseinrichtung und/oder ein Funktionselement eingesetzt werden, die besonders viel Platz benötigt, wie zum Beispiel ein Luftkanal. Dabei kann die Größe der Hohlkammern und/oder der Lagendopplungen an die durch die Versorgungseinrichtung und/oder ein Funktionselementauftretenden Belastungen angepasst werden. Die Hohlkammern kann man als Waben bezeichnen, die stabil genug gestaltet sind, Versorgungseinrichtungen und/oder ein Funktionselemente aufzunehmen und während der Lebenszeit des Schienenfahrzeugs zu tragen. In einem Beispiel kann auch die Stärke der Wände oder das Material des Kernelements, des Untergurtelements und/oder des Obergurtelements gestaltet oder ausgewählt sein, um eine ausreichende Stabilität der Hohlkammern oder Waben zu gewährleisten.

Gemäß einer Ausführungsforme kann in die Hohlkammern eine Versorgungseinrichtung und/oder ein Funktionselement eingesetzt werden, oder die Hohlkammer selbst kann für eine Versorgungseinrichtung und/oder als ein Funktionselement genutzt werden. Zum Beispiel kann die zentrale Hohlkammer in der Mitte als Lüftungsschacht verwendet werden. Dabei können das Untergurtelement, das Obergurtelement und/oder das Kernelement mit entsprechenden Eigenschaften ausgestattet sein, wie zum Beispiel einem geeigneten Material, einer geeigneten Beschichtung, einer geeigneten Wärmeleitfähigkeit und dergleichen. Figur 2 zeigt eine weitere Ausführungsform des erfindungsgemäßen Dachmoduls 100. In der in Figur 2 gezeigten Ausführungsform verlaufen das Obergurtelement 110 und das Untergurtelement 120 im Wesentlichen parallel oder in einem geringen Winkel zueinander. Auch weisen in dem Beispiel der Figur 2 das Untergurtelement 120 und das Kernelement 130 keine abgewinkelten Randbereiche auf, sondern verlaufen im Randbereich im Wesentlichen parallel zueinander. Das Dreiecksprofil mit den zwei Flanschen 146 stellt in der gezeigten Ausführungsform den oberen Längsträger des Wagenkastens dar. Die beiden Anschlussebenen an das Dach sind in der Ausführungsform der Figur 2 die um ca. 45° geneigte Fläche 144 und die im Wesentlichen horizontale Fläche 147. Die Nummer 145 stellt die Seitenwand des Wagenkastens des Schienenfahrzeugs dar. Dadurch kann das Dachmodul zum Beispiel über zwei Ebenen (entlang der geneigten Fläche 144 und der im Wesentlichen horizontalen Fläche 147) an einem Wagenkasten eines Schienenfahrzeugs montiert werden. Dabei kann die geneigte Fläche 144 mit dem, insbesondere abgewinkelten, Randbereich 151 des Obergurtelements 110 verbunden werden und die im Wesentlichen horizontale Fläche 147 mit dem Untergurtelement 120 und/oder dem Kernelement 130 befestigt werden. Dabei kann eine Verteilung der Kräfte, die beim Befestigen und Tragen des Dachmoduls am Wagenkasten auftreten, erfolgen. Insbesondere kann das Befestigungselement ausgelegt sein, eine punktuelle Belastung beim Befestigen des Dachmoduls am Wagenkasten zu vermeiden.

In dem in Figur 2 gezeigten Beispiel eines Dachmoduls 100 kann die Größe der Hohlkammern 133 dadurch variiert werden, dass die Wände des Kernelements 130 in Fahrzeugquerrichtung verschoben werden, wobei(die Fahrzeugquerrichtung in Figur 2 der Richtung von links nach rechts entspricht. Auch in dem in Figur 2 gezeigten Beispiel weist das Dachmodul gemäß Ausführungsformen der Erfindung erste Abschnitte 131 auf, in denen eine Lagendopplung durch das Kernelement 130 und das Obergurtelement 110 gebildet wird, und zweite Abschnitte 132, in denen eine Lagendopplung durch das Kernelement 130 und das Untergurtelement 120 gebildet wird.

Figur 3 zeigt eine Ausführungsform eines Dachmoduls 100, das im Wesentlichen dem in Figur 1 gezeigten Dachmodul entspricht. Demgemäß können auch alle beschriebenen Merkmale der Figur 1 auf die Ausführungsform der Figur 3 übertragen werden. Auch die Merkmale der Figur 2 können in einer Ausführungsform auf die Ausführungsform der Figur 3 entsprechend übertragen werden. Das Dachmodul 100 der Figur 3 weist außerdem noch Aufnahmen 140 auf. Die Aufnahmen sind sowohl an dem Obergurtelement 110 als auch an dem Untergurtelement 120 angebracht. Das Obergurtelement 110 ist in dem in Figur 3 gezeigten Beispiel mit zwei Aufnahmen 140, 141 ausgestattet, wobei insbesondere eine Aufnahme an jeder Seite des Dachmoduls in Querrichtung angebracht ist. Beispielhaft ist die Aufnahme 140 als eine Art C-Schiene gezeigt, die zum Beispiel für leichtere Ausrüstungsgegenstände eingesetzt werden kann. Die Aufnahme 141 ist in dem in Figur 3 gezeigten Beispiel als eine Art Halterung ausgeführt, insbesondere eine Halterung mit Stützplatten. Die Aufnahme 141 mit Stützplatten kann gemäß einer Ausführungsform für schwerere Ausrüstungsgegenstände verwendet werden, wie zum Beispiel Dachaufbauten, Teile eines Pantographen, eine Klimaanlage oder Teile davon, Transformatoren und dergleichen. In einer Ausführungsform kann zum Beispiel eine Außenverkleidung durch die Aufnahmen am Obergurtelement 110 befestigt werden.

An dem Untergurtelement 120 ist ebenfalls eine Aufnahme 142 angebracht, die in dem gezeigten Beispiel wie eine C-Schiene ausgeführt ist. Insbesondere können mit der Aufnahme am Untergurtelement 120 Teile der Innenverkleidung oder der Inneneinrichtung befestigt werden.

Wie in der Figur 3 anhand der Aufnahmen 140 und 142 gezeigt ist, können die Aufnahmen im Bereich von Lagendopplungen des Kernelements und des Obergurtelements, bzw. des Kernelements und des Untergurtelements angebracht werden.

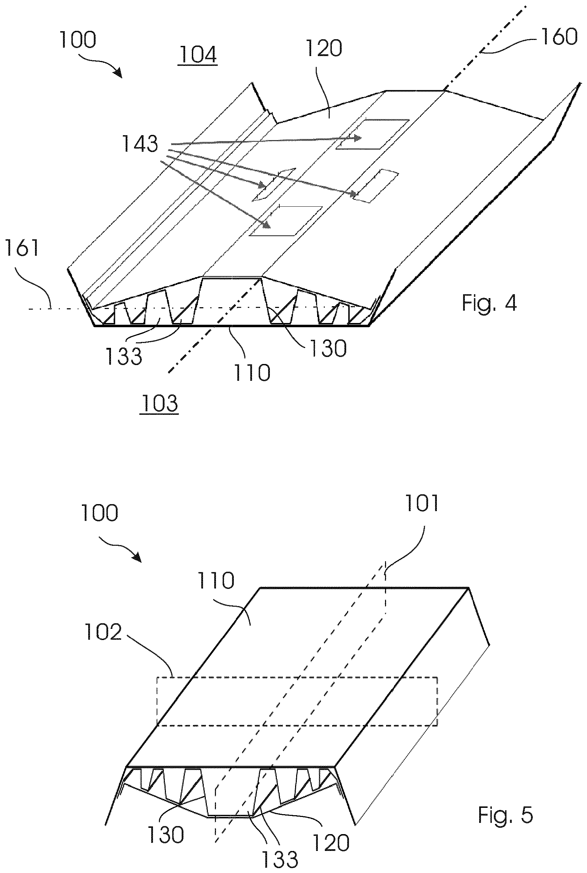

Figur 4 zeigt eine perspektivische Ansicht eines Dachmoduls 100 von unten, d.h. in einer Ansicht vom Innenraum des Schienenfahrzeugs aus. Das Dachmodul 100 entspricht im Wesentlichen dem Dachmodul der Figur 1. Das Dachmodul 100 der Figur 4 zeigt allerdings zusätzlich vier Wartungsöffnungen 143. Die Wartungsöffnungen 143 dienen typischerweise dazu, Zugriff zu den Versorgungseinrichtungen und/oder Funktionselemente in den Hohlkammern des Dachmoduls zu erlauben und die Wartung der Versorgungseinrichtungen und/oder Funktionselemente zu gewährleisten. Die Wartungsöffnungen 143 sind an verschiedenen Positionen sowohl entlang der Schienenfahrzeuglängsachse 160 als auch an verschiedenen Positionen der Schienenfahrzeugquerachse 161 vorgesehen, insbesondere um Zugriff auf verschiedene Hohlkammern des Dachmoduls zu ermöglichen.

Die Wartungsöffnungen 143 weisen in dem gezeigten Beispiel unterschiedliche Größen auf. Typischerweise ist die Größe der Wartungsöffnungen abhängig von der Größe der Hohlkammer, auf die durch die Wartungsöffnung 143 zugegriffen werden soll, bzw. der Größe der Versorgungseinrichtungen und/oder der Funktionselemente, die sich in dem entsprechenden Hohlkammern befinden. In der Figur 4 variiert auch die Form der Wartungsöffnungen. Typischerweise orientiert sich die Gestaltung der Wartungsöffnungen bezüglich Form und Größe an den durch die Wartungsöffnungen durchzuführenden Wartungsarbeiten und dafür benötigten Wartungswerkzeugen.

Die Wartungsöffnungen 143 können gemäß hierin beschriebenen Ausführungsformen symmetrisch angeordnet sein, wie in dem Beispiel der Figur 4 gezeigt. In anderen Ausführungsformen können die Wartungsöffnungen auch asymmetrisch angeordnet sein.

In einem Beispiel können die Wartungsöffnungen mit Klappen, Schiebern, Türen, und/oder Abdeckungen geschlossen werden, um die in den Hohlkammern befindlichen Versorgungseinrichtungen und/oder Funktionselemente zu schützen.

Figur 5 zeigt einen Anblick des Dachmoduls 100 von oben, d.h. von der Außenseite des Schienenfahrzeugs aus gesehen. Figur 5 zeigt ein Dachmodul, das im Wesentlichen dem Dachmodul der Figur 1 entspricht. In Figur 5 sind außerdem noch mögliche Teilungsebenen 101 und 102 eingezeichnet, die eine Längs-, bzw. Querteilung des Dachmoduls ermöglichen, um zum Beispiel die Herstellungskosten zu reduzieren und/ oder die Montage zu erleichtern. Die Teilungsebene 101 der Figur 5 läuft im Wesentlichen in Fahrzeuglängsachse. Die Teilungsebene 102 der Figur 5 läuft im Wesentlichen in Fahrzeugquerrichtung.

In einem Beispiel kann die Teilung des Dachmoduls für ein Dachmodul in Faserverbundbauweise gewählt werden. Wird das Dachmodul geteilt ausgeführt, können entsprechende Verbindungen zwischen den Segmenten ausgeführt werden, die die auftretenden Druck-, Zug, Torsions- oder Scherkräfte aufnehmen können.

Die perspektivischen Ansichten der Figuren 4 und 5 zeigen den Verlauf der Hohlkammern im Dachmodul in Fahrzeuglängsrichtung 160. Es können jedoch gegebenenfalls auch Unterteilungen oder Stopper vorgesehen sein, um unterschiedliche Funktionselemente und/oder Versorgungseinrichtungen gegen Verrutschen während des Betriebes des Schienenfahrzeugs zu sichern.

Gemäß hierin beschriebenen Ausführungsformen können die Funktionselemente und/oder Versorgungseinrichtungen Wärmedämmung, Isolierelemente, Luftführung, Lüftungskanäle, Teile der Klimaeinrichtung, Aufnahmen weiterer Gewerke, ein elektrisches Gewerk oder elektrische Gewerke, und/oder elektrische Leitungen umfassen.

Die vorstehend beschriebenen Ausführungsformen können beliebig miteinander kombiniert werden. Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 100: Dachmodul
- 101: Teilungsebene in Fahrzeuglängsrichtung
- 102: Teilungsebene in Fahrzeugquerrichtung
- 103: Außenraum des Schienenfahrzeugs
- 104: Innenraum des Schienenfahrzeugs
- 110: Obergurtelement
- 120: Untergurtelement
- 130: Kernelement
- 131: erste Abschnitte
- 132: zweite Abschnitte
- 133: Hohlkammern
- 150: Randbereiche des Untergurtelements
- 151: Randbereiche des Obergurtelements
- 152: Randbereiche des Kernelements
- 143: Wartungsöffnungen
- 144: geneigte Fläche
- 145: Seitenwand des Wagenkastens
- 146: Dreiecksprofil mit Flansch, oberer Längsträger des Wagenkastens
- 147: im Wesentlichen horizontale Fläche
- 160: Fahrzeuglängsachse
- 161: Fahrzeugquerachse

## Patentansprüche

1. Schienenfahrzeug mit wenigstens einem Dachmodul (100), wobei das Schienenfahrzeug eine Außenseite, einen Innenraum (104), eine Längsrichtung (160) und eine zur Längsrichtung im Wesentlichen senkrecht verlaufenden Querrichtung (161) hat, wobei das Dachmodul aufweist:
ein Obergurtelement (110), das einen Teil der Außenseite des Schienenfahrzeugs bildet;
ein Untergurtelement (120), das zum Innenraum (104) des Schienenfahrzeugs zeigt, wobei zwischen dem Obergurtelement (110) und dem Untergurtelement (120) ein Zwischenraum vorhanden ist;
ein Kernelement (130), das zwischen dem Obergurtelement (110) und dem Untergurtelement (120) verlaufende Wände umfasst, wobei die Wände den Zwischenraum zwischen dem Obergurtelement und dem Untergurtelement in Querrichtung in mehreren Hohlkammern (133) unterteilen, die sich entlang der Längsrichtung (101) erstrecken; und
wobei die Querschnittsgröße der Hohlkammern (133), in einer Ebene senkrecht zur Längsrichtung gesehen, unterschiedlich ist und die Querschnittsgröße angepasst ist, unterschiedliche Versorgungseinrichtungen und/oder Funktionselemente des Schienenfahrzeugs aufzunehmen.

2. Schienenfahrzeug nach Anspruch 1, wobei das Obergurtelement (110) und das Untergurtelement (120) abschnittsweise zueinander parallel und abschnittsweise geneigt zueinander verlaufen, sodass zumindest einige der Hohlkammern (133) unterschiedliche Höhen aufweisen.

3. Schienenfahrzeug nach einem der vorangehenden Ansprüche, wobei die Größe der Hohlkammern (133) durch die über die Erstreckung des Dachmoduls in Querrichtung variierende Höhe des Dachmoduls (100) an die unterschiedlichen Versorgungseinrichtungen und/oder Funktionselemente angepasst ist, wobei sich die Höhe im Wesentlichen senkrecht zur Längsrichtung (101) und senkrecht zur Querrichtung (102) des Schienenfahrzeugs erstreckt.

4. Schienenfahrzeug nach einem der vorangehenden Ansprüche, wobei das Kernelement (130) erste Abschnitte (131) umfasst, an denen das Kernelement (130) im Wesentlichen parallel zum Obergurtelement (110) verläuft, und wobei das Kernelement (130) zweite Abschnitte (132) umfasst, an denen das Kernelement (130) im Wesentlichen parallel zum Untergurtelement (120) verläuft, wodurch Lagendopplungen in der Struktur des Dachmoduls (100) entstehen.

5. Schienenfahrzeug nach Anspruch 4, wobei die Länge der ersten Abschnitte (131) und der zweiten Abschnitte (132) des Kernelements (130) derart gewählt sind, dass die Belastungen durch die Versorgungseinrichtungen und/oder Funktionselemente in den Hohlkammern (133), die von den ersten oder zweiten Abschnitten (131; 132) begrenzt sind, getragen werden.

6. Schienenfahrzeug nach einem der vorangehenden Ansprüche, wobei die Versorgungseinrichtungen und/oder Funktionselemente eine Wärmedämmung, eine Luftführung, ein elektrisches Gewerk, und/oder elektrische Leitungen umfassen, und wobei mindestens eine der Hohlkammern (133) einen Lüftungskanal beherbergt.

7. Schienenfahrzeug nach einem der vorangehenden Ansprüche, weiterhin umfassend: eine oder mehrere Aufnahmen (140, 141, 142) für Anbauten an der dem Innenraum (104) des Schienenfahrzeugs zugewandten Seite des Dachmoduls (100) und/oder Aufnahmen (140, 141) für Anbauten an der der Außenseite (103) des Schienenfahrzeugs zugewandten Seite des Dachmoduls (100), wobei die Aufnahmen (140, 141, 142) insbesondere C-Schienen umfassen.

8. Schienenfahrzeug nach Anspruch 7, wobei die Aufnahmen (140, 141, 142) an Positionen angebracht sind, an denen eine Lagendopplung aus Obergurtelement (110) und Kernelement (130) oder Untergurtelement (120) und Kernelement (130) auftritt.

9. Schienenfahrzeug nach einem der vorangehenden Ansprüche, weiterhin umfassend eine oder mehrere Wartungsöffnungen (143) an dem Untergurtelement (120), um von dem Innenraum (104) des Schienenfahrzeugs aus Wartungsarbeiten an den in den Hohlkammern (133) enthaltenen Versorgungseinrichtungen und/oder Funktionselementen vorzunehmen.

10. Schienenfahrzeug nach einem der vorangehenden Ansprüche, wobei das Dachmodul (100) zumindest teilweise in Faserverbundbauweise hergestellt ist.

11. Schienenfahrzeug nach einem der vorangehenden Ansprüche, wobei das Obergurtelement (110) und das Untergurtelement (120) dehnsteif, und die Wände des Kernelements (130) schub- und drucksteif ausgebildet sind.

12. Schienenfahrzeug nach einem der vorangehenden Ansprüche, wobei das Dachmodul (100) an dem Wagenkasten des Schienenfahrzeugs montierbar ist, wobei das Dachmodul insbesondere über zwei Ebenen mit dem Wagenkasten verbindbar ist.

13. Schienenfahrzeug nach einem der vorangehenden Ansprüche, wobei das Dachmodul in Querrichtung gesehen eine zentrale Hohlkammer aufweist, an die im Vergleich zur zentralen Hohlkammer kleinere Hohlkammern angrenzen, wobei die zentrale Hohlkammer einen größeren Querschnitt im Vergleich zu jeder der angrenzenden Hohlkammern aufweist, und wobei die zentrale Hohlkammer beispielsweise einen Lüftungsschacht für eine Klimaeinrichtung des Schienenfahrzeugs bildet.

14. Das Schienenfahrzeug nach einem der vorangehenden Ansprüche, wobei das Schienenfahrzeug einen Wagenkasten aufweist, und wobei mehrere Dachmodule (100) in Fahrzeuglängsrichtung an dem Wagenkasten befestigt sind.

15. Verfahren zum Aufbau eines Dachmoduls (100) in Sandwichbauweise für ein Schienenfahrzeug, umfassend:
Bereitstellen eines Obergurtelements (110) und eines Untergurtelements (120) für das Dachmodul (100);
Anbringen von Wänden eines Kernelements (130), die zwischen dem Obergurtelement (110) und dem Untergurtelement (120) verlaufen, um eine Struktur mit Hohlkammern (133) zwischen dem Obergurtelement (110) und dem Untergurtelement (120) zu bilden, wobei die Wände des Kernelements (130) derart angeordnet werden, dass das Kernelement (130) in zumindest einem ersten Abschnitten (131) zum Obergurtelement (110) und in zumindest einem zweiten Abschnitten (132) zum Untergurtelement (120) im Wesentlichen parallel verläuft, um eine Lagendopplung bereitzustellen;
Gestalten der Länge des zumindest einen ersten Abschnitts und des zumindest einen zweiten Abschnitts gemäß einer Belastung durch eine Versorgungseinrichtung und/oder ein Funktionselement des Schienenfahrzeugs, die oder das in zumindest einer der Hohlkammern (133) vorgesehen ist, wobei die Hohlkammer (133) von dem zumindest einen ersten Abschnitt (131) oder von dem zumindest einen zweiten Abschnitt (132) begrenzt wird.

## Claims

1. Rail vehicle having at least one roof module (100), the rail vehicle having an exterior, an interior (104), a longitudinal direction (160), and a transverse direction (161) substantially perpendicular to the longitudinal direction, the roof module comprising:
a top chord member (110) forming a portion of the exterior of the rail vehicle;
a lower chord member (120) facing toward the interior (104) of the rail vehicle, there being a space between the upper chord member (110) and the lower chord member (120);
a core member (130) comprising walls extending between the upper chord member (110) and the lower chord member (120), the walls transversely dividing the space between the upper chord member and the lower chord member into a plurality of hollow chambers (133) extending along the longitudinal direction (101); and
wherein the cross-sectional size of the hollow chambers (133), as viewed in a plane perpendicular to the longitudinal direction, is different and the cross-sectional size is adapted to accommodate different utilities and/or functional elements of the rail vehicle.

2. Rail vehicle according to claim 1, wherein the upper chord member (110) and the lower chord member (120) are parallel to each other in sections and inclined to each other in sections, so that at least some of the hollow chambers (133) have different heights.

3. Rail vehicle according to one of the preceding claims, wherein the size of the hollow chambers (133) is adapted to the different supply devices and/or functional elements by the height of the roof module (100) varying over the extension of the roof module in the transverse direction, wherein the height extends substantially perpendicular to the longitudinal direction (101) and perpendicular to the transverse direction (102) of the rail vehicle.

4. Rail vehicle according to any one of the preceding claims, wherein the core element (130) comprises first portions (131) at which the core element (130) extends substantially parallel to the upper chord element (110), and wherein the core element (130) comprises second portions (132) at which the core element (130) extends substantially parallel to the lower chord element (120), thereby creating double layers in the structure of the roof module (100).

5. Rail vehicle according to claim 4, wherein the length of the first sections (131) and the second sections (132) of the core element (130) are selected such that the loads of the utilities and/or functional elements in the hollow chambers (133), being limited by the first or second sections (131; 132), are carried.

6. Rail vehicle according to any one of the preceding claims, wherein the utilities and/or functional elements comprise a thermal insulation, an air duct, an electrical trade, and/or electrical conduits, and wherein at least one of the hollow chambers (133) accommodates a ventilation duct.

7. Rail vehicle according to any one of the preceding claims, further comprising: one or more receptacles (140, 141, 142) for attachments on the side of the roof module (100) facing the interior (104) of the rail vehicle and/or receptacles (140, 141) for attachments on the side of the roof module (100) facing the exterior (103) of the rail vehicle, wherein the receptacles (140, 141, 142) comprise in particular C-rails.

8. Rail vehicle according to claim 7, wherein the receptacles (140, 141, 142) are mounted at positions at which a double layer of upper chord element (110) and core element (130) or lower chord element (120) and core element (130) occurs.

9. Rail vehicle according to any one of the preceding claims, further comprising one or more maintenance openings (143) on the lower chord member (120) for carrying out maintenance work on the supply devices and/or functional elements contained in the hollow chambers (133) from the interior (104) of the rail vehicle.

10. Rail vehicle according to any one of the preceding claims, wherein the roof module (100) is at least partially made of fiber composite construction.

11. Rail vehicle according to any one of the preceding claims, wherein the upper chord element (110) and the lower chord element (120) are rigid in extension, and the walls of the core element (130) are rigid in shear and compression.

12. Rail vehicle according to one of the preceding claims, wherein the roof module (100) can be mounted on the body of the rail vehicle, wherein the roof module can be connected to the body of the vehicle in particular via two planes.

13. Rail vehicle according to any one of the preceding claims, wherein the roof module has, viewed in the transverse direction, a central hollow chamber which is adjoined by smaller hollow chambers compared to the central hollow chamber, wherein the central hollow chamber has a larger cross-section compared to each of the adjoining hollow chambers, and wherein the central hollow chamber forms, for example, a ventilation shaft for an air-conditioning device of the rail vehicle.

14. Rail vehicle according to any one of the preceding claims, wherein the rail vehicle comprises a car body, and wherein a plurality of roof modules (100) are attached to the car body in the longitudinal direction of the vehicle.

15. Method of assembling a sandwich type roof module (100) for a rail vehicle, comprising:
providing a top chord member (110) and a bottom chord member (120) for the roof module (100);
attaching walls of a core member (130) extending between the upper chord member (110) and the lower chord member (120) to form a structure having hollow chambers (133) between the upper chord member (110) and the lower chord member (120), wherein the walls of the core member (130) are arranged such that the core member (130) is substantially parallel in at least one first portion (131) to the upper chord member (110) and in at least one second portion (132) to the lower chord member (120) to provide layer doubling;
shaping the length of the at least one first portion and the at least one second portion according to a load of a supply device and/or a functional element of the rail vehicle provided in at least one of the hollow chambers (133), the hollow chamber (133) being limited by the at least one first portion (131) or by the at least one second portion (132).

## Revendications

1. Véhicule ferroviaire comportant au moins un module de toit (100), le véhicule ferroviaire présentant un côté extérieur, un espace intérieur (104), une direction longitudinale (160) et une direction transversale (161) sensiblement perpendiculaire à la direction longitudinale, le module de toit présentant :
un élément de ceinture supérieur (110) qui forme une partie du côté extérieur du véhicule ferroviaire ;
un élément de ceinture inférieur (120) qui est orienté vers l'espace intérieur (104) du véhicule ferroviaire, un espace intermédiaire étant présent entre l'élément de ceinture supérieur (110) et l'élément de ceinture inférieur (120) ;
un élément central (130) qui comprend des parois s'étendant entre l'élément de ceinture supérieur (110) et l'élément de ceinture inférieur (120), les parois divisant l'espace intermédiaire entre l'élément de ceinture supérieur et l'élément de ceinture inférieur en plusieurs cavités (133) dans la direction transversale, lesquelles s'étendent le long de la direction longitudinale (101) ; et
la taille de section transversale des cavités (133), vue dans un plan perpendiculaire à la direction longitudinale, étant différente et la taille de section transversale étant adaptée pour recevoir différents dispositifs d'alimentation et/ou éléments fonctionnels du véhicule ferroviaire.

2. Véhicule ferroviaire selon la revendication 1, dans lequel l'élément de ceinture supérieur (110) et l'élément de ceinture inférieur (120) s'étendent parallèlement l'un à l'autre par sections et de façon inclinée l'un par rapport à l'autre par sections, de sorte qu'au moins certaines cavités (133) présentent des hauteurs différentes.

3. Véhicule ferroviaire selon l'une des revendications précédentes, dans lequel la taille des cavités (133) est adaptée aux différents dispositifs d'alimentation et/ou éléments fonctionnels par la hauteur du module de toit (100) variant sur l'étendue du module de toit dans la direction transversale, la hauteur s'étendant sensiblement perpendiculairement à la direction longitudinale (101) et perpendiculairement à la direction transversale (102) du véhicule ferroviaire.

4. Véhicule ferroviaire selon l'une des revendications précédentes, dans lequel l'élément central (130) comprend des premières sections (131) au niveau desquelles l'élément central (130) s'étend sensiblement parallèlement à l'élément de ceinture supérieur (110), et dans lequel l'élément central (130) comprend des secondes sections (132) au niveau desquelles l'élément central (130) s'étend sensiblement parallèlement à l'élément de ceinture inférieur (120), moyennant quoi des doublages de couche sont formés dans la structure du module de toit (100).

5. Véhicule ferroviaire selon la revendication 4, dans lequel la longueur des premières sections (131) et des secondes sections (132) de l'élément central (130) sont choisies de telle sorte que sont supportées les charges engendrées par les dispositifs d'alimentation et/ou les éléments fonctionnels dans les cavités (133) qui sont délimitées par les premières ou les secondes sections (131 ; 132).

6. Véhicule ferroviaire selon l'une des revendications précédentes, dans lequel les dispositifs d'alimentation et/ou les éléments fonctionnels comprennent une isolation thermique, une conduite d'air, un corps électrique et/ou des lignes électriques, et au moins une des cavités (133) recevant un canal d'aération.

7. Véhicule ferroviaire selon l'une des revendications précédentes, comprenant en outre :
un ou plusieurs supports (140, 141, 142) destinés à des extensions du côté du module de toit (100) faisant face à l'espace intérieur (104) du véhicule ferroviaire et/ou des supports (140, 141) destinés à des extensions du côté du module de toit (100) faisant face au côté extérieur (103) du véhicule ferroviaire, les supports (140, 141, 142) comprenant en particulier des rails en C.

8. Véhicule ferroviaire selon la revendication 7, dans lequel les supports (140, 141, 142) sont fixés à des positions auxquelles apparaît un doublage de couche formé par l'élément de ceinture supérieur (110) et l'élément central (130) ou par l'élément de ceinture inférieur (120) et l'élément central (130).

9. Véhicule ferroviaire selon l'une des revendications précédentes, comprenant en outre une ou plusieurs ouvertures de maintenance (143) au niveau de l'élément de ceinture inférieur (120), lesquelles sont destinées à réaliser, à partir de l'espace intérieur (104) du véhicule ferroviaire, des travaux de maintenance sur les dispositifs d'alimentation et/ou les éléments fonctionnels contenus dans les cavités (133).

10. Véhicule ferroviaire selon l'une des revendications précédentes, dans lequel le module de toit (100) est fabriqué structurellement au moins partiellement en composite de fibres.

11. Véhicule ferroviaire selon l'une des revendications précédentes, dans lequel l'élément de ceinture supérieur (110) et l'élément de ceinture inférieur (120) sont réalisés de façon rigide en traction, et les parois de l'élément central (130) sont réalisées de façon rigide en poussée et en compression.

12. Véhicule ferroviaire selon l'une des revendications précédentes, dans lequel le module de toit (100) peut être monté sur la caisse de wagon du véhicule ferroviaire, le module de toit pouvant être relié à la caisse de wagon en particulier sur deux plans.

13. Véhicule ferroviaire selon l'une des revendications précédentes, dans lequel le module de toit, vu dans la direction transversale, présente une cavité centrale, à laquelle sont attenantes des cavités plus petites par comparaison avec la cavité centrale, la cavité centrale présentant une section transversale plus grande par comparaison à chaque cavité adjacente, et la cavité centrale formant par exemple une bouche d'aération destinée à un dispositif de climatisation du véhicule ferroviaire.

14. Véhicule ferroviaire selon l'une des revendications précédentes, dans lequel le véhicule ferroviaire présente une caisse de wagon, et plusieurs modules de toit (100) étant fixés à la caisse de wagon dans la direction longitudinale du véhicule.

15. Procédé d'assemblage d'un module de toit (100) à la manière structurelle d'un sandwich pour un véhicule ferroviaire, comprenant :
la fourniture d'un élément de ceinture supérieur (110) et d'un élément de ceinture inférieur (120) destinés au module de toit (100) ;
le montage de parois d'un élément central (130), lesquelles s'étendent entre l'élément de ceinture supérieur (110) et l'élément de ceinture inférieur (120) afin de former une structure comportant des cavités (133) entre l'élément de ceinture supérieur (110) et l'élément de ceinture inférieur (120), les parois de l'élément central (130) étant disposées de telle sorte que l'élément central (130) s'étend sensiblement parallèlement à l'élément de ceinture supérieur (110) dans au moins une première section (131) et à l'élément de ceinture inférieur (120) dans au moins une seconde section (132) afin de fournir un doublage de couche ;
le formage de la longueur de l'au moins une première section et de l'au moins une seconde section conformément à une charge créée par un dispositif d'alimentation et/ou un élément fonctionnel du véhicule ferroviaire, lequel dispositif d'alimentation ou élément fonctionnel étant prévu dans au moins une des cavités (133), la cavité (133) étant délimitée par l'au moins une première section (131) ou par l'au moins une seconde section (132).
